# EUROPÄISCHE PATENTSCHRIFT

(11) **EP 4 248 283 B1**
(45) Veröffentlichungstag und Bekanntmachung des Hinweises auf die Patenterteilung: **12.11.2025**
(21) Anmeldenummer: 21717934.0
(22) Anmeldetag: 16.04.2021
(51) Int. Cl.: G05B 19/042

(54) **ANZEIGE- UND/ODER BEDIENMODUL**
DISPLAY AND/OR CONTROL MODULE
MODULE D'AFFICHAGE ET/OU DE COMMANDE

(30) Priorität: 19.11.2020 WO PCT/EP2020/082743
(43) Veröffentlichungstag der Anmeldung: 27.09.2023
(73) Patentinhaber: VEGA Grieshaber KG, 77709 Wolfach (DE)
(72) Erfinder: HENGSTLER, Clemens, 77716 Haslach (DE); KASPAR, Stefan, 77716 Hofstetten (DE)
(74) Vertreter: Patentanwälte Bauer Vorberg Kayser
(86) Internationale Anmeldenummer: PCT/EP2021/059924
(87) Internationale Veröffentlichungsnummer: WO 2022/106070

(56) Entgegenhaltungen:
- DE-A1- 102006 062 476
- DE-A1- 102017 123 821

## Beschreibung

Die vorliegende Erfindung betrifft ein Anzeige- und/oder Bedienmodul gemäß dem Oberbegriff des Patentanspruchs 1, ein modular aufgebautes Feldgerät gemäß dem Oberbegriff des Patentanspruchs 9 sowie die Verwendung eines solchen Anzeige- und/oder Bedienmoduls gemäß Anspruch 12.

DE 10 2017 123 821 A1 offenbart ein Anzeige- und/oder Bedienmodul, das eine visuell fernauslesbare Anzeigeeinheit und eine Elektronikeinheit mit einer Funkschnittstelle aufweist. Das Anzeige- und/oder Bedienmodul kann als nachrüstbares Austauschmodul für ein Feldgerät ausgebildet sein.

DE 10 2006 062 476 A1 bezieht sich auf ein Feldgerät, das eine Sensoreinheit und zwei verschiedene Funkmodule aufweist. Ein erstes Funkmodul wird für den Austausch von zeitkritischen Daten (beispielsweise Steuerdaten) mit einer Zentraleinheit genutzt. Ein zweites Funkmodul dient dem Austausch von zeitunkritischen Daten (beispielsweise Bedien- und Konfigurierdaten) mit einem Handbediengerät.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandmessgeräte, Grenzstandmessgeräte und Druckmessgeräte mit Sensoren, die die entsprechenden Prozessvariablen Füllstand, Grenzstand oder Druck erfassen. Häufig sind solche Feldgeräte mit übergeordneten Einheiten, zum Beispiel Leitsystemen oder Steuereinheiten, verbunden. Diese übergeordneten Einheiten dienen zur Prozesssteuerung, Prozessvisualisierung und/oder Prozessüberwachung.

Die Energie- und/oder Signalübertragung zwischen Feldgerät und übergeordneten Einheiten erfolgt häufig nach dem bekannten 4 mA bis 20 mA Standard, bei dem eine 4 mA bis 20 mA Stromschleife beziehungsweise eine Zweidrahtleitung zwischen dem Feldgerät und der übergeordneten Einheit ausgebildet ist. Zusätzlich zu der analogen Übertragung von Signalen besteht die Möglichkeit, dass die Messgeräte gemäß verschiedenen anderen Protokollen, insbesondere digitalen Protokollen, weitere Informationen an die übergeordnete Einheit übermitteln oder von dieser empfangen. Beispielhaft seien hierfür das HART-Protokoll oder das Profibus-PA-Protokoll genannt. Weiterhin kann die Versorgung und digitale Kommunikation nach dem in Arbeit befindlichen und auf Ethernet basierenden Zweileiter-Standard APL realisiert werden (APL = Advanced Physical Layer).

Die Energieversorgung dieser Feldgeräte erfolgt ebenfalls über das 4 mA bis 20 mA Stromsignal, sodass neben der Zweidrahtleitung keine zusätzliche Versorgungsleitung notwendig ist. Um den Verdrahtungs- und Installationsaufwand sowie die Sicherheitsmaßnahmen, beispielsweise beim Einsatz in explosionsgeschützten Bereichen, so gering wie möglich zu halten, ist es auch nicht gewünscht, zusätzliche Stromversorgungsleitungen vorzusehen.

Zweileiterfeldgeräte weisen bspw. im Vergleich zu Vierleiterfeldgeräten einen erheblich reduzierten Aufwand für Installation und Verdrahtung auf. Bei Zweileiterfeldgeräten entfällt die zusätzliche Installation und Verdrahtung einer Versorgungsspannung komplett, da diese, wie oben dargestellt über die Zweidrahtleitung erfolgt. Dies bietet insbesondere in Anwendungen, in denen Vorschriften zum Explosionsschutz zu beachten sind, erhebliche Vorteile, da die separaten Leitungen für die Versorgungsspannung und die dafür erforderlichen zusätzlichen Komponenten schon bei der Planung zu berücksichtigen sind.

Zweileiterfeldgeräte können ferner eigensicher ausgestaltet werden und haben damit einen erweiterten Einsatzbereich in explosionsgeschützten (Ex-) Bereichen. Wartungsarbeiten an Feldgeräten in Ex-Bereichen sind bei Zweileiterfeldgeräten deutlich einfacher und sicherer als bspw. bei Vierleiterfeldgeräten, da sie gefahrlos auch bei laufendem Messbetrieb erfolgen können. Bei Vierleiter-Geräten hingegen muss zunächst die Stromversorgung unterbrochen und gegen Wiedereinschaltung gesichert werden. Dies erfolgt in aller Regel in den Anschlussräumen, die sich oft in großer Entfernung von der Messstelle befinden.

Aus dem Stand der Technik ist es bspw. bekannt, Funkmodule zur leichteren Bedienung und Parametrierung von Feldgeräten zu verwenden. Es sind Lösungen bekannt, bei denen die Feldgeräte integrierte Funkmodule aufweisen oder in einem Messumformerspeisegerät, einer Einrichtung zur Energieversorgung der Feldgeräte, angeordnet sind.

Zunehmend wird für Feldgeräte eine Fernablesbarkeit gefordert, die mittels einfacher Leuchtsignale, vergleichbar einer Verkehrsampel, einen Zustand des Feldgerätes oder das Über- oder Unterschreiten eines vorher festgelegten Mess- oder Grenzwertes signalisiert, da auf diese Weise, ohne an dem Feldgerät vor Ort sein zu müssen oder eine Funkverbindung zu diesem aufzubauen, eine erste Information über den Zustand des Feldgerätes verfügbar gemacht werden kann.

Ferner sind aus dem Stand der Technik modular aufgebaute Feldgeräte bekannt, bei denen aus einer Mehrzahl von kombinierbaren Sensoren, Gehäusen, Elektronikeinheiten und Bedien- und/oder Anzeigeeinheiten ausgewählt und ein entsprechendes Feldgerät aufgebaut werden kann. Ein solches modulares Feldgerätekonzept wird bspw. von der Firma Vega Grieshaber KG angeboten. Kombinierbar sind in der Regel ein Sensor, ein entsprechendes Elektronikmodul, das eine Messwertverarbeitung und eine Schnittstelle zu einer Steuerung und ggf. einem verwendeten Feldbus bereitstellt, sowie verschiedene Anzeige- und/oder Bedieneinheiten. Die Sensoren, Elektronikmodule und Anzeige- und/oder Bedieneinheiten sind sowohl aneinander als auch an verschiedene verfügbare Gehäuse angepasst.

Die Elektronikmodule sind dabei an die jeweils verwendeten Sensoren angepasst und bewerkstelligen beispielsweise eine Signalverarbeitung, weisen vorzugsweise analoge und/oder digitale Kommunikationsschnittstellen und/oder eine Energieversorgung und/oder eine Schnittstelle zu der Anzeige- und/oder Bedieneinheit auf. Ferner können die Elektronikmodule mechanische Schnittstellen zur Kontaktierung der Sensoren und/oder der Anzeige- und/oder Bedieneinheit aufweisen.

Drahtlose Schnittstellen zur digitalen Übertragung von Mess- und Diagnoseinformationen sowie zur drahtlosen Bedienung und Parametrierung von Feldgeräten sind ein wichtiger Grundstein für industrielle IoT-Anwendungen im Bereich der Automatisierungstechnik. Zahlreiche verschiedene Funkstandards sind hierzu möglich und üblich, wie zum Beispiel WLAN (IEEE 802.11), Bluetooth (IEE 802.15.1), LoRaWAN (LoRa-Alliance Industry consortium), NB-IoT/4G (3GPP release 13), 5G (3GPP Release 15), WirelessHART (IEC 62591), Sigfox (Sigfox Proprietary) usw.

Jeder dieser Funkstandards hat jeweils unterschiedliche Stärken und Schwächen. So ist zum Beispiel Bluetooth ideal, um im Nahbereich (bis ca. 25 m) Feldgeräte zu bedienen, da auf kurzer Distanz große Datenraten übertragen werden können. Aufgrund der kurzen Reichweite eignet es sich aber nur bedingt zur Datenübertragung über weite Strecken oder in großen Anlagen, wie sie in der Automatisierungstechnik üblich sind. LoRaWAN hingegen hat zum Beispiel zur Gerätebedienung eine zu geringe Bandbreite - dafür aber den Vorteil, dass kleine Datenmengen über große Distanzen (mehrere Kilometer) mit sehr geringem Energieaufwand übertragen werden können, was sich zur Übertragung von Messwerten oder Statusinformationen sehr gut, aber zur Bedienung weniger gut eignet. Die Umsetzung nur eines dieser Funkstandards schränkt damit die Einsatzmöglichkeiten stark ein.

Weiterhin sind einige dieser Funkstandards (z.B. LoRaWAN oder NB-IoT oder 5G) auf öffentliche oder private Netze angewiesen, um die Daten des Feldgerätes weiter an den Bestimmungsort zu übertragen. Keiner der oben genannten Funkstandards ist mit öffentlichen oder privaten Netzen in allen Orten der Welt verfügbar.

Es ist die Aufgabe der vorliegenden Erfindung, ein Anzeige- und/oder Bedienmodul sowie ein Feldgerät gemäß dem Stand der Technik so weiterzubilden, dass dieses flexibler eingesetzt werden kann und die oben beschriebenen Nachteile nicht aufweist.

Diese Aufgabe wird durch ein Anzeige- und/oder Bedienmodul mit den Merkmalen des Anspruchs 1, ein modular aufgebautes Feldgerät mit den Merkmalen des Anspruchs 9 und die Verwendung eines Anzeige- und/oder Bedienmoduls gemäß Anspruch 12 gelöst.

Die Funkschnittstellen sind für eine externe Kommunikation geeignet ausgebildet und angeordnet.

Üblicherweise werden Feldgeräte bereits im Stand der Technik mit einem Anzeige- und/oder Bedienmodul, an dem vor Ort beispielsweise Messwerte abgelesen oder Konfigurationen des Feldgerätes vorgenommen werden können, ausgestattet. Durch eine Integration wenigstens zweier Funkschnittstellen in ein solches Anzeige- und/oder Bedienmodul kann ein platzsparender Aufbau sowie ein elektrisch günstiger Aufbau erreicht werden, da das Anzeige und/oder Bedienmodul in der Regel bereits entsprechende Elektronikkomponenten für eine Anzeige von Messwerten und/oder die Konfiguration des Feldgerätes aufweist. In einer solchen Konfiguration ist es möglich, dass die Funkschnittstellen lediglich die bereits aufbereiteten Messwerte oder entsprechende Konfigurationsmerkmale übermittelt und so entsprechende Elektronikkomponenten nicht mehrfach verbaut werden müssen.

Vorteilhafterweise werden Anzeige- und/oder Bedieninformationen zwischen der Anzeige- und/oder Bedienmodul und der Elektronikeinheit leitungsgebunden übermittelt. Sind also die Funkschnittstellen ebenfalls in dem Anzeige- und/oder Bedienmodul angeordnet, so findet auch hier eine leitungsgebundene Übermittlung der Anzeige- und/oder Bedieninformationen zwischen den Funkschnittstellen und der Elektronikeinheit des Anzeige- und/oder Bedienmoduls statt. Ein entsprechender Aufbau ermöglicht eine besonders einfache Integration der Funkschnittstellen in bestehende Feldgerätkonzepte, wobei dafür insbesondere keine Änderungen des Feldgeräts, insbesondere des Elektronikmoduls des Feldgeräts, notwendig sind.

Durch die vorliegende Kombination wird erreicht, dass sowohl neue als auch Bestandsgeräte mit dem vorliegenden Anzeige- und/oder Bedienmodul mit mehreren Funkschnittstellen zur externen Kommunikation ausgerüstet werden und die sich daraus ergebenden Vorteile nutzen können. Insbesondere in großen und unübersichtlichen Anlagen, in denen die Feldgeräte eingesetzt werden, ist es von Vorteil, wenn eine Parametrierung oder sonstige Konfiguration eine Bedienperson nicht unmittelbar am Feldgerät arbeiten muss, sondern dies über eine Funkverbindung erfolgen kann.

Unter einer externen Kommunikation soll in der vorliegenden Anmeldung eine Kommunikation verstanden werden, die mit Komponenten oder Einheiten erfolgt, die außerhalb des Feldgeräts, mit dem das Anzeige- und/oder Bedienmodul gekoppelt ist oder wird, angeordnet sind. Außerhalb bedeutet dabei eine Anordnung in einer räumlichen Distanz von wenigstens 10 cm.

Die Funkschnittstellen können insbesondere als Bluetooth-Schnittstelle, WiFi-Schnittstelle, oder als LPWAN-Schnittstelle ausgebildet sein. Die vorgenannten Schnittstellen sind gut erprobt, weisen einen ausreichenden Datendurchsatz auf und werden bereits heute im industriellen Umfeld eingesetzt.

Ferner kann das Anzeige- und/oder Bedienmodul zusätzlich eine NFC-Schnittstelle aufweisen, die insbesondere für eine Nutzerauthentifizierung genutzt werden kann. Über die NFC-Schnittstelle kann sichergestellt werden, dass der Nutzer physischen Zugang zu dem Feldgerät hat und berechtigt ist, dieses zu bedienen. Zusätzlich kann über NFC ein Verbindungsaufbau einer Bluetoothverbindung unterstützt werden, in dem ggf. Verbindungsparameter ausgetauscht und/oder andere Parameter für die Bluetoothverbindung über NFC zur Verfügung gestellt werden.

Unter NFC ist ein auf der RFID-Technik basierender, internationaler Übertragungsstandard zum kontaktlosen Austausch von Daten per elektromagnetischer Induktion mittels loser gekoppelter Spulen über kurze Strecken von wenigen Zentimetern bei einer Frequenz von 13,56 MHz.

Bei der Bluetooth Verbindung handelt es sich um einen Industriestandard gemäß IEEE 802.15.1 für die Datenübertragung per Funksignal über kurze Distanzen.

Unter WIFI, auch als wireless LAN (WLAN) gemäß IEEE 802.11 bekannt, ist ebenfalls eine Datenübertragung per Funksignal gemeint. Es handelt sich hierbei um den wohl gängigsten Standard zur Datenübertragung per Funk im Office, Heim und Industriebereich.

Unter der Abkürzung LPWAN (Low Power Wide Area Network) werden verschiedene Klassen von Netzwerkprotokollen zur Verbindung von Niedrigenergiegeräten wie batteriebetriebene Sensoren mit einem Server zusammengefasst. Die Protokolle sind so ausgelegt, dass eine große Reichweite und ein niedriger Energieverbrauch der Endgeräte bei niedrigen Betriebskosten erreicht werden können. Beispielhafte LPWAN Technologien sind LoRaWAN, LTE-M, NB-IoT und Sigfox.

LoRaWAN, kurz für Long Range Wide Area Network (LoRaWAN), ist ein Standard der LoRa Alliance. Hierin sind sowohl Funktechnik als auch Protokolltechnik beschrieben.

LTE-M und NB-IoT sind Funkstandards, die von der 3GPP standardisiert wurden und im 4G Mobilfunknetz und auch unter 5G weiterhin verfügbar sind. NB-IoT nutzt bspw. die durch die Weiterentwicklung der Mobilfunk-Endgeräte hin zu höheren Frequenzbändern freiwerdenden Mobilfunkfrequenzen des GSM-900 Frequenzband.

Sigfox ist ein proprietäres Funksystem der gleichnamigen französischen Firma Sigfox SA, das im SRD-Band (868 Megahertz in Europa, 902 Megahertz in den USA) funkt.

Insgesamt ist durch eine Mehrzahl von Funkschnittstellen für unterschiedliche Funkkommunikationen ein größerer geografischer Einsatzbereich des Feldgeräts in Kombination mit dem Feldgerät möglich, da die Netzabdeckung je nach Funkstandard und Region unterschiedlich gut ist.

Das Anzeige- und/oder Bedienmodul kann an einem Feldgerät angebracht und/oder mit einem Feldgerät gekoppelt werden, insbesondere kann das Anzeige- und/oder Bedienmodul mit dem Feldgerät mechanisch und/oder kommunikativ gekoppelt werden. Eine mechanische Kopplung eines solchen Anzeige- und/oder Bedienmoduls kann beispielsweise über einen Schnappmechanismus, einen Clipp-Mechanismus, einen Hakenmechanismus, einen Bajonettverschluss, einen Magnetkoppelmechanismus oder dergleichen erfolgen. Eine kommunikative Kopplung zwischen dem Feldgerät und dem Anzeige- und/oder Bedienmodul erfolgt bevorzugt leitungsgebunden, kann aber auch über eine weitere Funkschnittstelle zur internen Kommunikation erfolgen. Über NFC oder RFID kann sowohl eine Datenals auch eine Energieübertragung stattfinden, sodass auf eine leitungsgebundene Kopplung des Anzeige- und/oder Bedienmoduls verzichtet werden kann.

Ferner kann vorgesehen sein, dass das Anzeige- und/oder Bedienmodul von dem Feldgerät abgesetzt angeordnet ist und eine separate Energieversorgung aufweist.

Das Anzeige- und/oder Bedienmodul ist so konzipiert, dass es innerhalb des Gehäuses des zugehörigen Feldgerätes montiert werden kann. Hierdurch ist es in gleicher Weise wie der zugehörige Sensor gegen äußere Einflüsse der Umgebung geschützt, ohne Zusatzkosten für ein eigenes Gehäuse zu verursachen.

Außerdem kann durch eine Ausgestaltung mit mehreren Funkschnittstellen ein erhöhtes Sicherheitslevel und damit ein verbesserter Schutz vor Manipulation einer Prozessanlage, in der ein Feldgerät eingesetzt wird, erreicht werden. Wird bspw. über die erste Funkschnittstelle, z.B. Bluetooth, eine Parametrisierung des Geräts vorgenommen, kann diese Information über eine weitere Funkschnittstelle, bspw. die zweite Funkschnittstelle an ein System oder eine Person weitergegeben werden. Über die zweite Funkschnittstelle kann dann bspw. auch eine Bestätigung oder Erlaubnis für den Zugriff über die erste Funkschnittstelle erfolgen.

Erfindungsgemäß nutzen die erste Funkschnittstelle und die zweite Funkschnittstelle unterschiedliche Frequenzbänder und/oder Protokolle. Durch die Nutzung unterschiedlicher Frequenzbänder kann ein besonders flexibler Einsatz erreicht werden, da eine geographische Abdeckung unterschiedlicher Funkstandards so kombiniert genutzt werden kann. Ferner können unterschiedliche örtliche Begebenheiten der jeweiligen Installation dazu führen, dass die eine oder die andere Funkschnittstelle besser oder schlechter für eine Kommunikation geeignet ist. Beispielsweise können Sub-Gigahertz Frequenzbänder (LPWAN) nur wenig Daten übertragen, dafür aber über hohe Distanzen und mit einer hohen Durchdringung. Im Gegensatz dazu können höhere Frequenzen mehr Daten, aber nur auf kürzere Distanzen übertragen. Beispielsweise kann über das Sub-Gigahertz Netz nur der Status, also die Meldung übertragen, dass der Sensor ein Problem hat. Um das Problem zu beheben, also die Echokurve des Sensors auszulesen, muss der Kunde/Nutzer näher an den Sensor mit dem Bedientool über Bluetooth um die Echokurven auszulesen.

Zusätzlich oder alternativ können die Funkschnittstellen unterschiedliche Datenraten aufweisen. Abhängig von einem gewünschten Dienst, werden unterschiedliche Datenraten benötigt. Bspw. benötigt eine Konfiguration und Parametrierung eines Feldgeräts eine höhere Datenrate als die Übermittlung eines Messwertes. Gleichzeitig benötigt eine Funkschnittstelle mit einer höheren Datenrate auch mehr Energie als eine Funkschnittstelle mit einer niedrigeren Datenrate. Damit kann aber abhängig von der jeweiligen Nutzung diejenige Funkschnittstelle ausgewählt werden, die bei der benötigten Datenrate die wenigste Energie verbraucht.

In einer Ausgestaltungsform kann vorgesehen sein, dass die erste Funkschnittstelle zur Kommunikation mit einer ersten übergeordneten Einheit und die zweite Funkschnittstelle zur Kommunikation mit einer zweiten übergeordneten Einheit ausgebildet ist, wobei die erste und die zweite übergeordnete Einheit unterschiedliche Funktionen ausüben.

Es ist bspw. möglich, dass eine der Funkschnittstellen mit einer zentralen Wartungs- und Überwachungsplattform, eine andere Funkschnittstelle mit einer übergeordneten Einheit zur Datenerfassung und Visualisierung von Messwerten verbunden ist und eine weitere Funkschnittstelle mit einer übergeordneten Einheit zur Konfiguration und Parametrierung des Feldgeräts verbunden werden kann. Es sei an dieser Stelle angemerkt, dass die vorliegende Erfindung nicht auf zwei oder drei Funkschnittstellen beschränkt ist, sondern auch mit mehreren Funkschnittstellen, bspw. vier oder fünf Funkschnittstellen ausgebildet sein kann. Ferner ist es möglich, dass eine Funkschnittstelle auch mit mehreren übergeordneten Einheiten gleichzeitig oder abwechselnd kommuniziert.

Die unterschiedlichen Funkschnittstellen bilden parallele Datenpfade aus. Dies kann sinnvoll sein, wenn eine Redundanz geschaffen werden soll. Die Funkschnittstelle bildet einen ersten Datenpfad und die zweite Funkschnittstelle bildet einen zweiten Datenpfad aus und sind mit der gleichen übergeordneten Einheit verbunden. Dabei ist es bspw. möglich, dass die Verbindung zu einer übergeordneten Einheit auf unterschiedlichen Ebenen erfolgt.

Zusätzlich oder alternativ können die unterschiedlichen Funkschnittstellen unterschiedliche Zugriffsrechte und/oder Berechtigungen und/oder eine unterschiedliche Verfügbarkeit aufweisen. So kann ein Lese- und Schreib-Zugriff nur über eine der Funkschnittstellen erlaubt sein, wobei alle weiteren Funkschnittstelle rein als Informationspfad mit Leserechten ausgelegt sind.

Eine Energieversorgung des Anzeige- und/oder Bedienmoduls erfolgt vorteilhafterweise über das Feldgerät und kann bspw. durch einen internen Energiespeicher und/oder ein vorzugsweise internes Energy-Harvesting-Modul unterstützt sein. Dies ist besonders vorteilhaft bei Feldgeräten, bei denen die zur Verfügung stehende Energie in bestimmten oder allen Betriebszuständen nur zum Betrieb des Feldgerätes, aber nicht in jedem Betriebszustand zum Betreiben zusätzlicher Einrichtungen ausreicht. In diesen Fällen kann das Anzeige- und/oder Bedienmodul selbst Energie sammeln und zwischenspeichern, oder es kann in Betriebszuständen, in denen nicht benötigte Energie des Feldgeräts zur Verfügung steht, diese gespeichert und zu einem späteren Zeitpunkt verwendet werden.

Der interne Energiespeicher kann bspw. als Kondensator oder Akkumulator oder ähnliche Energiespeicher ausgestaltet sein, der zur Zwischenpufferung von Energie genutzt wird. Je nach Funkstandard wird insbesondere für das Senden und oder Empfangen von Daten kurzzeitig mehr Energie benötigt als über das zugehörige Feldgerät bezogen werden kann. Diese Energie kann in Zeiten, in denen weniger Energie benötigt wird, nach und nach im internen Energiespeicher zwischengespeichert werden, damit sie zum späteren Senden/Empfangen von Daten zur Verfügung steht. Optional kann zusätzlich ein Energy Harvesting Modul enthalten sein, das aus der Umgebung Energie gewinnt und im internen Energiespeicher zwischenspeichert.

Vorteilhafterweise ist sowohl das Feldgerät als auch das Anzeige- und/oder Bedienmodul eigensicher gemäß der Zündschutzart Ex ia ausgestaltet und vorteilhafterweise vollständig über eine Zweidrahtleitung des Feldgeräts mit Energie versorgt. Die Energieversorgung des Feldgeräts erfolgt dabei vorzugsweise gemäß dem 4 mA bis 20 mA Standard, Zweileiter Profibus PA oder über eine Zweidraht-Ethernet-Verbindung, vorzugsweise Ethernet-APL, eine Foundation-Fieldbus-Verbindung.

Optional kann wenigstens eine der Funkschnittstellen einen Antennenadapter zum Anschluss wenigstens einer externen Antenne aufweisen. Durch den Anschluss einer externen Antenne kann erreicht werden, dass auch in einer ungünstigen Einbausituation des Feldgeräts, in der eine Funkverbindung am Ort des Feldgeräts nur unzureichend oder nicht möglich ist, durch eine geeignete Positionierung der externen Antenne eine Funkverbindung ermöglicht wird.

In einer bevorzugten Ausgestaltungsform ist für einen Teil oder alle der verbauten Funkschnittstellen ein gemeinsamer Antennenadapter vorgesehen, der geeignet ausgebildet und angeordnet ist, dass eine externe Multibandantenne angeschlossen werden kann.

Vorteilhafterweise weist das Anzeige- und/oder Bedienmodul eine Powermanagement-Einheit auf, die die Funkmodule zeitgesteuert und/oder ereignisgesteuert aktiviert und/oder deaktiviert.

Mit einer solchen Powermanagement-Einheit kann erreicht werden, dass möglichst wenig Energie für die Funkkommunikation benötigt wird, dadurch, dass die Funkschnittstellen dann, wenn sie nicht benötigt werden, deaktiviert werden und nur dann, wenn tatsächlich eine Funkkommunikation ansteht oder geplant ist, aktiviert werden. Eine solche Aktivierung kann sowohl zeitgesteuert, bspw. in regelmäßigen Zeitintervallen, oder ereignisgesteuert, bspw. bei Vorliegen eines Messwerts oder einer Alarmnachricht oder dergleichen erfolgen.

Über eine Schnittstelle zu dem mit dem Anzeige- und/oder Bedienmodul gekoppelten Feldgerät wird das Anzeige- und/oder Bedienmodul mit Energie versorgt. Dabei ist das darunterliegende Gerät, bspw. ein Elektronikmodul des Feldgeräts verantwortlich wie viel Energie dem Anzeige- und/oder Bedienmodul zur Verfügung steht. Das Powermanagement des Anzeige- und/oder Bedienmodul entscheidet dann, wie es die einzelnen Funkschnittstellen ansteuert. So können, bspw. während ein Nutzer über Bluetooth mit dem Gerät kommuniziert, die weiteren Funkschnittstellen ausgeschaltet oder nur sehr sporadisch genutzt werden. Das Anzeige- und/oder Bedienmodul kann hierfür einen eigenen Energie- oder Energiezwischenspeicher aufweisen, der die Funkschnittstellen ausreichend lange mit Energie versorgt. Das Powermanagement des Anzeige- und oder Bedienmoduls entscheidet dabei, wie es die einzelnen Funkschnittstellen ansteuert.

Vorteilhafterweise ist das Anzeige- und/oder Bedienmodul als nachrüstbares Austauschmodul für ein vorhandenes Feldgerät ausgebildet. Auf diese Weise können bereits vorhandene Anzeige- und/oder Bedienmodule durch das vorliegende Modul ausgetauscht und somit Bestandsgeräte problemlos nachgerüstet werden. Das Anzeige- und/oder Bedienmodul ist abnehmbar, d.h. es kann bei Bedarf auch nachträglich aufgesteckt werden und ist damit nachrüstbar, es kann von einem Feldgerät entfernt und auf ein anderes Feldgerät aufgesteckt werden. Hierdurch ergibt sich auch ein Kostenvorteil - nur wenn Funkschnittstellen benötigt werden muss ein Anzeige- und/oder Bedienmodul mit integrierten Funkschnittstellen aufgesteckt werden - bei Anwendungen ohne Funkübertragung kann es weggelassen werden.

Erfindungsgemäß ist auch ein modular aufgebautes Feldgerät mit einem Anzeige- und/oder Bedienmodul gemäß der obigen Beschreibung, sowie die Verwendung eines Anzeige- und/oder Bedienmoduls gemäß der obigen Beschreibung zur Nachrüstung eines vorhandenen Feldgeräts.

Ein modulares Feldgerätekonzept zum Aufbau von Feldgeräten weist eine Mehrzahl von unterschiedlichen Gehäusen, eine Mehrzahl von unterschiedlichen Sensoren sowie eine Mehrzahl von verschiedenen, mit den Sensoren verbindbaren Anzeige- und/oder Bedieneinheiten auf, wobei das Feldgerätesystem wenigstens eine Anzeige- und/oder Bedieneinheit mit wenigstens zwei unterschiedlichen Funkmodulen für unterschiedliche Funkstandards zur drahtlosen Kommunikation mit einer weiteren Einheit aufweist.

Ein solches Feldgerätekonzept umfasst dabei eine Reihe von austauschbaren und aufeinander abgestimmten Modulen, wobei wenigstens eine Anzeige- und/oder Bedieneinheit wenigstens zwei unterschiedliche integrierte Funkmodule aufweist. Auf diese Weise können initial ohne Funkmodul ausgestaltete Feldgeräte durch einen einfachen Austausch der Anzeige- und/oder Bedieneinheit mit Funkmodulen ausgestattet werden. Es ist so in einfacher Weise möglich, auch ältere Feldgeräte mit modularem Aufbau nachzurüsten.

Vorzugsweise sind das Feldgerät und das Anzeige- und/oder Bedienmodul vollständig über eine Zweileiterschnittstelle des Feldgeräts mit Energie versorgt. Die Funkschnittstelle wird also vorzugsweise ebenfalls über das zugehörige Feldgerät mit Energie versorgt, in der Prozessmesstechnik ist das typischerweise eine Zweileiter 4 bis 20 mA Stromschnittstelle, optional mit HART-Kommunikation. In einer Ausgestaltungsform kann die die Zweileiterschnittstelle gemäß dem 4 mA bis 20 mA Standard ausgebildet sein. Es sind aber auch andere Versorgungsmöglichkeiten wie zum Beispiel Vierleiter-Schnittstellen möglich. Das vereinfacht die Installation und reduziert die Kosten, da keine separate Versorgung für das Modul hergestellt werden muss. Somit ist es auch bei Bestandsgeräten einfach nachrüstbar.

Alternativ kann die Zweileiterschnittstelle als Zweileiter-Ethernetschnittstelle, insbesondere als Ethernet-APL-Schnittstelle ausgebildet sein. Vorzugsweise ist das Anzeige- und/oder Bedienmodul vorzugsweise eigensicher ausgestaltet, d.h. es entspricht der Zündschutzart Ex ia. Hierfür ist die Energie im Anzeige- und/oder Bedienmodul, insbesondere durch die Tatsache, dass es ausschließlich vom zugehörigen vorzugsweise ebenfalls eigensicheren Feldgerät versorgt wird, soweit begrenzt, dass eine Zündung von explosiven Gasen verhindert wird. Das hat den Vorteil, dass es auf eigensichere Feldgeräte aufgesteckt werden kann, ohne den Zündschutz der Eigensicherheit zu verletzen. Eine eigensichere Ausgestaltung des Anzeige- und/oder Bedienmoduls erweitert den Einsatzbereich erheblich, da insbesondere in der Prozessmesstechnik viele Feldgeräte in der Zündschutzart eigensicher ausgeführt sind und diese nur mit eigensicheren Modulen erweitert werden können, ohne den Zündschutz zu verlieren.

Verwendung eines Anzeige- und/oder Bedienmoduls gemäß einem der Ansprüche 1 bis 7 zur Nachrüstung eines vorhandenen Feldgeräts.

Ein wesentlicher Vorteil der vorliegenden Erfindung liegt darin, dass Funkstandards häufigen Änderungen unterliegen und sich derzeit sehr dynamisch entwickeln. Durch ein abnehmbares Anzeige- und/oder Bedienmodul mit integrierten Funkschnittstellen können auch bereits installierte Feldgeräte mit neuer Technologie nachgerüstet werden, ohne das zugehörige Feldgerät tauschen zu müssen. Zudem ist häufig unklar, welcher Funkstandard sich für welche Anwendung durchsetzen / bewähren wird. Durch die Implementierung mehrerer Funkstandards in einem austauschbaren Anzeige- und/oder Bedienmodul wird mit höherer Wahrscheinlichkeit der passende Funkstandard unterstützt.

Die vorliegende Erfindung wird nachfolgend anhand eines Ausführungsbeispiels und unter Bezugnahme auf die beigefügte Figur eingehend erläutert.

Es zeigt:

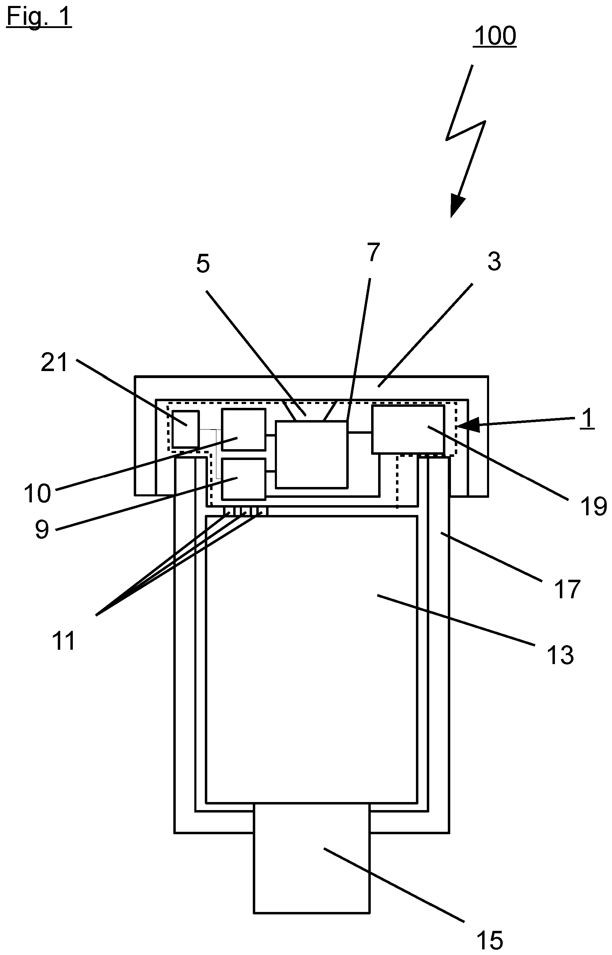

- Figur 1: eine vereinfachte Schnittdarstellung eines Feldgerätes mit einem Anzeige- und Bedienmodul gemäß der vorliegenden Anmeldung.

Figur 1 zeigt eine vereinfachte Schnittdarstellung eines Feldgerätes 100 mit einem Anzeige- und/oder Bedienmodul 1 , das im vorliegenden Ausführungsbeispiel als Anzeige- und Bedienmodul 1, also als ein Modul, das sowohl eine Anzeige aufweist, als auch eine Bedienung des Feldgeräts 100 ermöglicht, realisiert ist, gemäß der vorliegenden Anmeldung.

Das Feldgerät 100 weist einen Sensor 15 zur Erfassung einer physikalischen Größe sowie ein in einem Feldgerätegehäuse 17 angeordnetes Elektronikmodul 13 auf und ist durch das als Gehäusedeckel 3 ausgebildete Anzeige- und Bedienmodul 1 endseitig abgeschlossen.

Das Feldgerät 100 des vorliegenden Ausführungsbeispiels ist Teil einer modular aufgebauten Feldgeräteserie mit einer Mehrzahl von unterschiedlichen Sensoren 15, an die Sensoren 15 angepassten Elektronikmodulen 13 zur Verarbeitung der Sensorsignale und wiederum angepassten Feldgerätegehäusen 17 zur Aufnahme der vorstehenden Komponenten.

Das Anzeige- und Bedienmodul 1 ist über elektrische Kontakte 11 mit dem Elektronikmodul 13 verbunden und weist ein Gehäuse 3, eine in dem Gehäuse 3 angeordnete Elektronikeinheit 7, mit einer als LED-Statusleuchte ausgebildeten Anzeigeeinheit 5 und einer ersten Funkschnittstelle 9 sowie einer zweiten Funkschnittstelle 10 auf. Über die erste Funkschnittstelle 9, die vorliegend als Bluetooth-Schnittstelle ausgebildet ist, ist aufgrund der vergleichsweise hohen Datenrate, die über Bluetooth erzielbar ist, eine Bediendung und insbesondere Konfiguration und Parametrisierung des Feldgeräts 100 möglich.

Die zweite Funkschnittstelle 10 ist vorliegend als LoRaWan Schnittstelle ausgebildet und hat damit zum Beispiel zur Gerätebedienung eine zu geringe Bandbreite - dafür aber den Vorteil, dass kleine Datenmengen über große Distanzen (mehrere Kilometer) mit sehr geringem Energieaufwand übertragen werden können.

Im vorliegenden Ausführungsbeispiel wird die zweite Funkschnittstelle 10 daher für eine Messwertübertragung an ein web-basiertes System zur Darstellung und Aufbereitung der Messwerte des Sensors 15 genutzt. Ferner werden über die zweite Funkschnittstelle 10 Daten zum Status des Feldgeräts 100 an eine zweite übergeordnete Einheit übertragen, die anhand dieser Daten eine Überwachung des Feldgerätestatus durchführt und dem Betreiber einen Wartungsbedarf anzeigt, bevor es zu einem Defekt oder Ausfall des Feldgeräts 100 kommt.

Die beiden Funkschnittstellen 9, 10 weisen einen gemeinsamen als Buchse ausgebildeten Antennenadapter 21 auf, an dem eine externe Multibandantenne (vorliegend nicht dargestellt) angeschlossen werden kann. Die externe Multibandantenne kann durch ein zwischen der Multibandantenne und dem Antennenadapter 21 von dem Feldgerät 100 entfernt angebracht werden, sodass eine Funkkommunikation auch dann möglich ist, wenn das Feldgerät 100 selbst an einem ungünstigen, bspw. von einem Funknetz abgeschirmten Ort angeordnet ist.

Das Gehäuse 3 ist im vorliegenden Ausführungsbeispiel als Deckel für das Feldgerätegehäuse 17 ausgebildet, wobei ein optisches Signal der Anzeigeeinheit 5 außen am Feldgerät derart sichtbar ist, dass bspw. das erfolgreiche Koppeln des Feldgeräts 100 mit einem Bluetooth-Bediengerät sichtbar gemacht werden kann.

Zusätzlich zu den bereits beschriebenen Komponenten weist das Anzeige- und Bedienmodul 1 gemäß Figur 1 noch einen integrierten Energiezwischenspeicher 19 auf, der vorliegend zusätzlich ein Energy-Harvesting-Modul aufweist. Mittels des Energy-Harvesting-Moduls kann Energie aus der Umwelt gewonnen und in dem Energiezwischenspeicher 19 zwischengespeichert werden. Ferner wird überschüssige Energie des Feldgeräts 100 in dem Energiezwischenspeicher 19 gespeichert um für Zeitpunkte einer Funkübertragung ausreichend Energie zur Verfügung zu haben. Das Anzeige- und Bedienmodul 1 belastet damit den Energiehaushalt des Feldgerätes 100 nicht mehr als ein herkömmliches Anzeige- und Bedienmodul 1 gemäß dem Stand der Technik und kann dennoch den beschriebenen Mehrwert bieten.

Ferner ist in die Elektronikeinheit 5 des Anzeige- und Bedienmoduls 1 ein eigenes Powermanagement integriert. Über die elektrischen Kontakte 11 werden dem Anzeige- und Bedienmodul 1 von dem Elektronikmodul 13 des Feldgeräts 100 Energie und Messdaten zur Verfügung gestellt. Das Anzeige- und Bedienmodul 1 wird also von dem darunter liegenden Gerät mit Energie versorgt. Dabei ist das darunterliegende Elektronikmodul 13 verantwortlich wie viel Energie dem Anzeige- und Bedienmodul 1 zur Verfügung steht. Das Powermanagement des Anzeige- und Bedienmoduls 1 entscheidet dann, wie es die einzelnen Funkschnittstellen ansteuert. So können, während ein Nutzer über Bluetooth mit dem Gerät kommuniziert, die weiteren Funkschnittstellen ausgeschaltet oder nur sehr sporadisch genutzt werden.

Das vorliegende Anzeige- und Bedienmodul 1 ist an die modular aufgebaute Feldgeräteserie derart angepasst, dass es andere Anzeige- und/oder Bedienmodule 1 aus der Serie ersetzen und damit zur Nachrüstung vorhandener Feldgeräte 100 verwendet werden kann.

### Bezugszeichenliste

- 1: Anzeige- und/oder Bedienmodul
- 3: Gehäusedeckel
- 5: Anzeigeeinheit
- 7: Elektronikeinheit
- 9: erste Funkschnittstelle
- 10: zweite Funkschnittstelle
- 11: elektrische Kontakte
- 13: Elektronikmodul
- 15: Sensor
- 17: Feldgerätegehäuse
- 19: Energiezwischenspeicher mit optionalem Energy-Harvesting-Modul
- 21: Antennenadapter

- 100: Feldgerät

## Patentansprüche

1. Abnehmbares Anzeige- und/oder Bedienmodul (1) für ein Feldgerät (100), mit einem Gehäuse (3), einer in dem Gehäuse (3) angeordneten Anzeigeeinheit (5) und einer Elektronikeinheit (7), wobei das Anzeige- und/oder Bedienmodul (1) wenigstens eine mechanische Schnittstelle zur Verbindung des Anzeige- und/oder Bedienmoduls (1) mit dem Feldgerät (100) sowie eine Datenschnittstelle für eine Kommunikation zwischen dem Anzeige- und/oder Bedienmodul (1) und einem Elektronikmodul (13) des Feldgeräts (100) aufweist, wobei
die Elektronikeinheit (7) wenigstens eine erste Funkschnittstelle (9) aufweist,
**dadurch gekennzeichnet, dass**
die Elektronikeinheit (7) wenigstens eine weitere, von der ersten Funkschnittstelle (9) verschiedene, zweite Funkschnittstelle (10) aufweist,
die unterschiedlichen Funkschnittstellen (9, 10) parallele Datenpfade ausbilden, wobei die erste Funkschnittstelle einen ersten Datenpfad und die zweite Funkschnittstelle einen zweiten Datenpfad ausbildet, und mit der gleichen übergeordneten Einheit verbunden sind, und
die erste Funkschnittstelle (9) und die zweite Funkschnittstelle (10) unterschiedliche Frequenzbänder und/oder Protokolle nutzen.

2. Anzeige- und/oder Bedienmodul (1) gemäß Anspruch 1,
**dadurch gekennzeichnet, dass**
die erste Funkschnittstelle (9) und die zweite Funkschnittstelle (10) unterschiedliche Datenraten aufweisen.

3. Anzeige- und/oder Bedienmodul (1) gemäß einem der vorhergehenden Ansprüche,
**dadurch gekennzeichnet, dass**
die erste Funkschnittstelle (9) zur Kommunikation mit einer ersten übergeordneten Einheit und die zweite Funkschnittstelle (10) zur Kommunikation mit einer zweiten übergeordneten Einheit ausgebildet ist, wobei die ersten und die zweite übergeordnete Einheit unterschiedliche Funktionen ausüben.

4. Anzeige- und/oder Bedienmodul (1) gemäß Anspruch 1,
**dadurch gekennzeichnet, dass**
die unterschiedlichen Funkschnittstellen (9, 10) unterschiedliche Zugriffsrechte und/oder Berechtigungen und/oder eine unterschiedliche Verfügbarkeit aufweisen.

5. Anzeige- und/oder Bedienmodul (1) gemäß einem der vorhergehenden Ansprüche,
**dadurch gekennzeichnet, dass**
das Anzeige- und/oder Bedienmodul (1) eine eigene Energieversorgung (19) in Form eines Energiespeichers und/oder Energy-Harvesting-Moduls aufweist.

6. Anzeige- und/oder Bedienmodul (1) gemäß einem der vorhergehenden Ansprüche,
**dadurch gekennzeichnet, dass**
wenigstens eine der Funkschnittstellen (9, 10) einen Antennenadapter (21) zum Anschluss wenigstens einer externen Antenne aufweist.

7. Anzeige- und/oder Bedienmodul (1) gemäß einem der vorhergehenden Ansprüche,
**dadurch gekennzeichnet, dass**
das Anzeige- und/oder Bedienmodul (1) eine Powermanagement-Einheit aufweist, die die Funkmodule zeitgesteuert und/oder ereignisgesteuert aktiviert und/oder deaktiviert.

8. Anzeige- und/oder Bedienmodul (1) gemäß einem der vorhergehenden Ansprüche,
**dadurch gekennzeichnet, dass**
es als nachrüstbares Austauschmodul für ein vorhandenes Feldgerät (100) ausgebildet ist.

9. Modular aufgebautes Feldgerät (100) mit einem Anzeige- und/oder Bedienmodul (1) gemäß einem der vorhergehenden Ansprüche.

10. Modular aufgebautes Feldgerät (100) gemäß Anspruch 9,
**dadurch gekennzeichnet, dass**
das Feldgerät (100) und das Anzeige- und/oder Bedienmodul (1) vollständig über eine Zweidrahtschnittstelle des Feldgeräts (100) mit Energie versorgt sind.

11. Modular aufgebautes Feldgerät (100) gemäß einem der Ansprüche 9 oder 10,
**dadurch gekennzeichnet, dass**
die Zweidraht-Schnittstelle gemäß dem 4 mA bis 20 mA Standard oder als Zweidraht-Ethernet-Schnittstelle, insbesondere als Ethernet-APL-Schnittstelle ausgebildet, und das Feldgerät (100) vorzugsweise eigensicher ausgestaltet ist.

12. Verwendung eines Anzeige- und/oder Bedienmoduls (1) gemäß einem der Ansprüche 1 bis 5 zur Nachrüstung eines vorhandenen Feldgeräts (100).

## Claims

1. A display and/or operating module (1) for a field device (100), with a housing (3), a display unit (5) arranged in the housing (3) and an electronics unit (7), wherein the display and/or operating module (1) has at least one mechanical interface for connecting the display and/or operating module (1) to the field device (100) and a data interface for a communication between the display and/or operating module (1) and an electronics module (13) of the field device (100),
wherein the electronics unit (7) has at least one first radio interface (9)
**characterized in that**
the electronics unit (7) has at least one further second radio interface (10) different from the first radio interface (9),
the different radio interfaces (9, 10) forming parallel data paths, wherein the first radio interface forms a first data path and the second radio interface forms a second data path, and being connected to the same superordinate unit, and the first radio interface (9) and the second radio interface (10) using different frequency bands and/or protocols.

2. The display and/or operating module (1) according to claim 1,
**characterized in that**
the first radio interface (9) and the second radio interface (10) have different data rates.

3. The display and/or operating module (1) according to any one of the preceding claims,
**characterized in that**
the first radio interface (9) is configured for communication with a first higher-level unit and the second radio interface (10) for communication with a second higher-level unit, wherein the first and the second higher-level unit perform different functions.

4. The display and/or operating module (1) according to claim 1,
**characterized in that**
the different radio interfaces (9, 10) have different access rights and/or authorizations and/or a different availability.

5. The display and/or operating module (1) according to any one of the preceding claims,
**characterized in that**
the display and/or operating module (1) has its own energy supply unit (19) in the form of an energy storage unit and/or energy harvesting module.

6. The display and/or operating module (1) according to any one of the preceding claims,
**characterized in that**
at least one of the radio interfaces (9, 10) has an antenna adapter (21) for connecting at least one external antenna.

7. The display and/or operating module (1) according to any one of the preceding claims,
**characterized in that**
the display and/or operating module (1) has a power management unit that activates and/or deactivates the radio modules in a time-controlled and/or event-controlled manner.

8. The display and/or operating module (1) according to any one of the preceding claims,
**characterized in that**
it is configured as a retrofittable replacement module for an existing field device (100).

9. A field device (100) with a modular configuration, with a display and/or operating module (1) according to any one of the preceding claims.

10. A field device (100) with a modular configuration according to claim 9,
**characterized in that**
the field device (100) and the display and/or operating module (1) are completely supplied with energy via a two-wire interface of the field device (100).

11. A field device (100) with a modular configuration according to any one of the claims9 or 10,
**characterized in that**
the two-wire interface is configured in accordance with the 4 mA to 20 mA standard or as a two-wire Ethernet interface, in particular as an Ethernet APL interface, and the field device (100) is preferably configured to be intrinsically safe.

12. Use of a display and/or operating module (1) according to any one of the claims 1 to 5 for retrofitting an existing field device (100).

## Revendications

1. Module d'affichage et/ou de commande (1) amovible pour un appareil de terrain (100), avec un boîtier (3), une unité d'affichage (5) agencée dans le boîtier (3) et une unité électronique (7), dans lequel le module d'affichage et/ou de commande (1) présente au moins une interface mécanique pour la liaison du module d'affichage et/ou de commande (1) avec l'appareil de terrain (100) ainsi qu'une interface de données pour une communication entre le module d'affichage et/ou de commande (1) et un module électronique (13) de l'appareil de terrain (100),
dans lequel
l'unité électronique (7) présente au moins une première interface radio (9), **caractérisé en ce que**
l'unité électronique (7) présente au moins une autre seconde interface radio (10) différente de la première interface radio (9),
les différentes interfaces radio (9, 10) forment des chemins de données parallèles, dans lequel la première interface radio forme un premier chemin de données et la seconde interface radio forme un second chemin de données, et sont reliées à la même unité parente, et
la première interface radio (9) et la seconde interface radio (10) utilisent des bandes de fréquences et/ou des protocoles différents.

2. Module d'affichage et/ou de commande (1) selon la revendication 1,
**caractérisé en ce que**
la première interface radio (9) et la seconde interface radio (10) présentent des débits de données différents.

3. Module d'affichage et/ou de commande (1) selon l'une quelconque des revendications précédentes,
**caractérisé en ce que**
la première interface radio (9) est conçue pour une communication avec une première unité parente et la seconde interface radio (10) est conçue pour une communication avec une seconde unité parente, dans lequel la première et la seconde unité parente exercent des fonctions différentes.

4. Module d'affichage et/ou de commande (1) selon la revendication 1,
**caractérisé en ce que**
les différentes interfaces radio (9, 10) présentent des droits d'accès et/ou des autorisations différents et/ou une disponibilité différente.

5. Module d'affichage et/ou de commande (1) selon l'une quelconque des revendications précédentes,
**caractérisé en ce que**
le module d'affichage et/ou de commande (1) présente sa propre alimentation en énergie (19) sous la forme d'un accumulateur d'énergie et/ou d'un module de récupération d'énergie.

6. Module d'affichage et/ou de commande (1) selon l'une quelconque des revendications précédentes,
**caractérisé en ce que**
au moins une des interfaces radio (9, 10) présente un adaptateur d'antenne (21) pour le raccordement d'au moins une antenne externe.

7. Module d'affichage et/ou de commande (1) selon l'une quelconque des revendications précédentes,
**caractérisé en ce que**
le module d'affichage et/ou de commande (1) présente une unité de gestion de puissance qui active et/ou désactive les modules radio de manière commandée par le temps et/ou commandée par des événements.

8. Module d'affichage et/ou de commande (1) selon l'une quelconque des revendications précédentes,
**caractérisé en ce que**
il est conçu en tant que module de remplacement de mise à niveau pour un appareil de terrain (100) existant.

9. Appareil de terrain (100) à structure modulaire avec un module d'affichage et/ou de commande (1) selon l'une quelconque des revendications précédentes.

10. Appareil de terrain (100) à structure modulaire selon la revendication 9,
**caractérisé en ce que**
l'appareil de terrain (100) et le module d'affichage et/ou de commande (1) sont entièrement alimentés en énergie par une interface à deux fils de l'appareil de terrain (100).

11. Appareil de terrain (100) à structure modulaire selon l'une quelconque des revendications 9 ou 10,
**caractérisé en ce que**
l'interface à deux fils est conçue selon la norme 4 mA à 20 mA ou en tant qu'interface Ethernet à deux fils, en particulier en tant qu'interface Ethernet-APL, et l'appareil de terrain (100) est de préférence conçu à sécurité intrinsèque.

12. Utilisation d'un module d'affichage et/ou de commande (1) selon l'une quelconque des revendications 1 à 5
pour la mise à niveau d'un appareil de terrain (100) existant.
